Europäisches Patentamt

European Patent Office

Office européen des brevets

(11) Publication number: **0 270 223**
**A1**

## EUROPEAN PATENT APPLICATION

(21) Application number: 87309041.9

(22) Date of filing: 13.10.87

(51) Int. Cl.4: **B01D 53/34** , C01B 17/04

(30) Priority: 04.12.86 US 937861

(43) Date of publication of application:
08.06.88 Bulletin 88/23

(84) Designated Contracting States:
BE DE FR GB IT NL SE

(71) Applicant: **THE DOW CHEMICAL COMPANY**
**2030 Dow Center Abbott Road P.O. Box 1967**
**Midland, MI 48640(US)**

(72) Inventor: **Ayasse, Conrad**
**RR 2S Cochrane**
**Alberta TOL OWO Canada T2L 2A6(CA)**

(74) Representative: **Burford, Anthony Frederick et al**
**W.H. Beck, Greener & Co. 7 Stone Buildings**
**Lincoln's Inn**
**London WC2A 3SZ(GB)**

(54) Process for conversion or reduction of sulfur dioxide to elemental sulfur.

(57) A flue gas stream containing $SO_2$ and other sulfur compounds is contacted with an absorber flowing in a closed loop and the sulfur compounds then desorbed. The desorbed sulfur compounds are burned with methane to produce elemental surfur and the combustion products washed with water. Elemental sulfur is separated from the water wash. Preferably, the absorbent is a piperazinone or an alkyl substituted piperazinone, especially N,N'dimethylpiperazinone. Carbon dixoide readily can be recovered from the cleaned flue gas."

EP 0 270 223 A1

-1-

# PROCESS FOR CONVERSION OR REDUCTION OF
# SULFUR DIOXIDE TO ELEMENTAL SULFUR

The present invention concerns a process for conversion or reduction of sulfur dioxide to elemental sulfur.

A plant which consumes fossil fuel for power emits flue gases which carry various sulfur compounds in the flue discharge to the atmosphere, thereby creating problems by pollution of the atmosphere with sulfur compounds. This pollution occurs for plants which require fossil fuels, smelters, some oil refineries, manufacturing plants for sulfuric acid, pulp or paper mills, including those mills which use the Claus process, and other such plants. It is estimated that the gaseous emissions of $SO_2$ in North America and Western Europe total one hundred billion pounds (fifty billion kg) per year.

For pollution control, it is desirable to remove the $SO_2$ and other sulfur compounds. As discussed hereinafter, the term "sulfur compounds" includes primarily $SO_2$, other oxides of sulfur, $H_2S$ and COS. While the latter two gases may be small in quantity compared with $SO_2$, they are nevertheless

compounds which must be removed to purify the flue gas discharge. Since the flue gas is derived from various types of oxidation processes, the flue gas typically will have $CO_2$ in it. $CO_2$ and $SO_2$ mixed together handicap conventional $CO_2$ recovery techniques. For instance, the absorption removal process of $CO_2$ using MEA (methyl ethanol amine) is handicapped by the presence of $SO_2$. If the $SO_2$ is removed, then this known process can be used to remove $CO_2$. It is possible to recover the $SO_2$ and other sulfur compounds to thereby enable $CO_2$ removal from cleansing of the flue gas stream. This absorption removal process has value by enabling $CO_2$ recovery which is a valuable by-product of flue gas streams. Fortunately, the sulfur recovery is enhanced by virtue of the fact that the sulfur product recovered is extremely valuable.

One advantage of the present process is the ability to additionally handle COS which usually occurs in trace quantities, requires treatment and cannot be ignored. However, separate treatment of COS imposes additional capital requirements by requiring additional process reactors. In this instance, COS is present but it is hydrolyzed to form $H_2S$ and $CO_2$ in the absorbent. Hydrogen sulfide typically also requires additional capital equipment in the form of another reactor for its separation and removal. One example of such a reactor is a Claus reactor for $H_2S$ processing and elimination. The present absorbent, however, is able to absorb $H_2S$ for recycling and convert it in a manner described later.

With these problems in view, the present procedure is described as a process for recovery of various sulfur compounds which are ultimately converted

-3-

into elemental sulfur. The process utilizes an absorbent to remove sulfur compounds from a flue gas stream so that the stream is substantially free of sulfur products and is then able to be discharged to the atmosphere with markedly reduced pollution impact.

In particular, the present invention concerns a process for the conversion or reduction of sulfur compounds present in a gas stream to elemental sulfur which comprises the steps of;

(a) contacting the gas stream with an absorbent which flows in a closed loop and is capable of absorbing the sulfur compounds;

(b) desorbing the sulfur compounds from the absorbent;

(c) burning the desorbed sulfur compounds in the presence of natural gas to form combustion products including elemental sulfur, sulfur compounds and carbon compounds;

(d) washing with water the combustion products including elemental sulfur and sulfur compounds;

(e) separating elemental sulfur from the water wash; and

(f) recycling any remaining sulfur compounds from the washed combustion products to mix with further inflow of the gas stream.

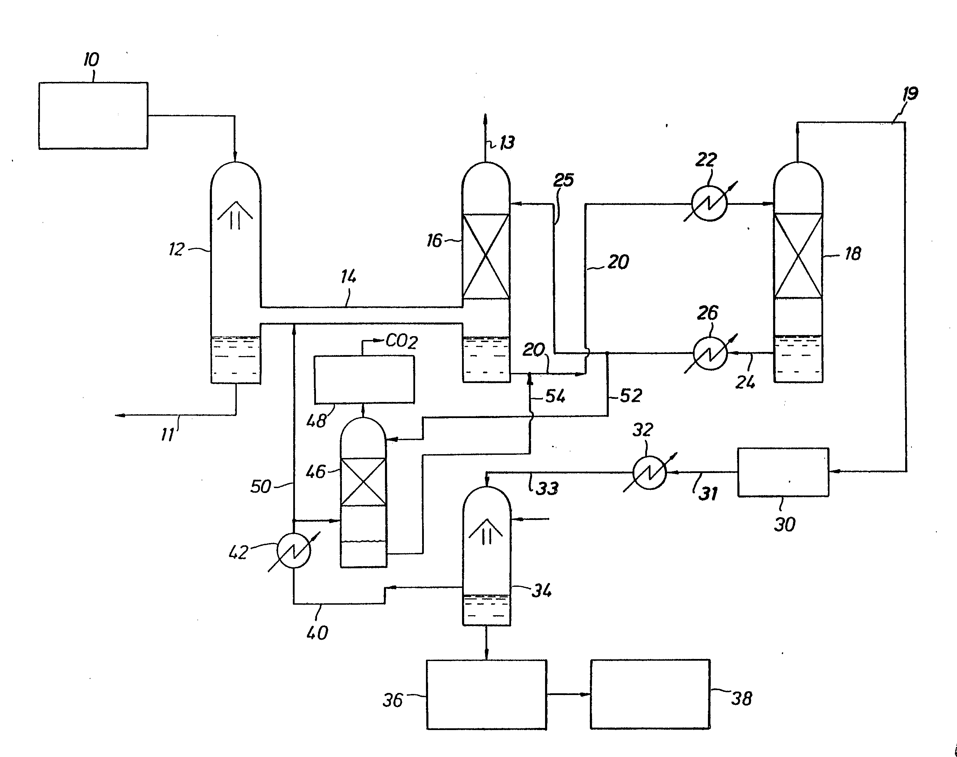

So that the manner in which the above recited features and advantages of the present invention are attained and can be understood in detail, including a more particular description of the invention, reference may be had to the embodiments thereof which are illustrated in the appended drawing.

-4-

It is to be noted, however, that the appended drawing illustrates only typical embodiments of this invention and are therefore not to be considered limiting of its scope, for the invention may admit to other equally effective embodiments.

The single drawing is a schematic of the flue gas treatment apparatus used in the method of this invention for removing sulfur compounds which are converted into elemental sulfur.

The process apparatus shown in the single drawing will be described first. Certain reactions necessary for a successful operation of the recovery process will also then be given. In addition, characteristics of the absorbent will be set forth with a view to showing how sulfur compounds, primarily $SO_2$, can be recovered from a flue gas stream and subsequently utilized.

In the single drawing, a flue gas source 10 is represented in very general terms and may include any source of flue gas which is susceptible of sulfur content. As used in the remainder of the present description, this can be any source which delivers flue gas which is typically made up of water, various oxides of carbon and various sulfur compounds. There may be additional trace materials such as metal oxides in the event the flue gas source is a smelter. If it is some other source, the metal oxides may be reduced, but the flue gas may include a substantial quantity of fly ash, cinders or uncombusted particles. Since the disclosure is to be viewed as working with flue gas sources in general, no precise limitation on the content of the flue gas is specified. The flue gas stream is thus

-5-

originated from the source 10 and delivered to a wash tower 12. The wash tower is provided with a flow of cold water which rinses the flue gas. The wash tower recovers fly ash, cinders, particles of ore and other constituents which are removed by the process of washing. These constituents are collected at the bottom of the wash tower and are removed via conduit 11 for subsequent processing. The discharge of the wash tower is a washed flue gas stream. At this juncture, it has been cooled and is primarily water, oxides of carbon and sulfur, and other trace gas components. It is discharged from the wash tower through a conduit 14 and delivered to an absorber tower 16. The absorber tower 16 discharges the clean flue gas out the top 13. The flue gas is washed with the absorbent which is recycled in a closed loop as will be described. The absorber tower 16 thus washes the flowing gas with the absorbent which is sprinkled from the top toward the bottom and collects in the bottom and is removed. The absorbent carries away the various sulfur compounds.

An example of absorbent is a piperazinone or an alkyl substituted piperazinone which shows excellent $SO_2$ absorbent properties. The preferred absorbent is N,N'-dimethylpiperazinone (NNDP). There is a closed cycle flow path (closed loop) provided for the absorbent. The absorbent tower 16 discharges the cleaned flue gas 13. The tower 16 is connected by suitable conductors to recycle the absorbent with a desorber tower 18. In a desorber tower, the absorbent which carries the gases is sprayed from the top of the tower to thereby discharge gases after spraying the liquid. The absorbent is collected at the bottom and recycled. The flow path thus includes a line 20 which

-6-

removes the laden absorbent from the tower 16 to the tower 18. The absorbent is substantially pure, usually in the range of 90%, the remainder being water. The absorbent capacity is about 1.05 mol $SO_2$/mol NNDP, or about 34 weight percent $SO_2$ at ambient temperatures with a high capacity for absorbing $H_2S$. NNDP is highly desirable in terms of its physical characteristics. As an example, the boiling point of NNDP is about 241°C while the freezing point is about -35°C which holds vapor losses to a minimum and avoids most freezing problems. Moreover, the transfer capacity of NNDP is quite high. The line 20 passes through a heat exchanger 22 which aids desorbing of $H_2S$. The absorbent is removed from the column 18 through a line 24 which passes through a cooling tower 26. The cooling tower delivers the absorbent back by line 25 to the tower 16 so that the absorbent flows in an endless cycle or closed loop.

The tower 18 recovers an overhead gas in line 19 which is primarily $SO_2$ and $H_2S$. Recall at this juncture that most of the vapor and $CO_2$ from the flue gas source 10 is discharged at 13 as a clean discharge from the tower 16. The desorbed gases removed from the tower 18 are delivered to a burner 30 by line 19 where gas flow is mixed with air and $CH_4$. Obviously, this $CH_4$ is obtained from natural gas which may include other combustibles. The gas is burned at an elevated temperature, preferably in the range of about 1300°C and then it is discharged through line 31 to a cooling tower 32. The temperature in the burner 30 is best for relatively complete combustion in air with an open flame. The temperature can be reduced to 750 to 800°C by using activated alumina catalysts. The gas then flows by line 33 to a wash tower 34. In the wash tower, cold water is sprayed through the gas. Elemental sulfur is washed from the gas flow. The sulfur in the water is recovered at the bottom and delivered to a sulfur and water separator 36. The sulfur is then separated from the water and delivered to a sulfur storage facility 38. The preferred process is to recover sulfur and water together at the separator 36 and then to separate out the sulfur. Alternate sulfur recovery procedures can be used. As a convenient procedure, separation of sulfur from water can be done simply by evaporating the water from the colloidal sulfur to thereby form sulfur in brick form. In that form, it is a substantially inert product which can be stored for an indefinite period of time.

The tower 34 discharges a gas flow through the line 40. The line 40 then passes through a cooling tower 42. The cooling tower 42 discharges a flow primarily of $CO_2$ with some sulfur compounds present in it. If the combustion in the burner is totally effective, this will reduce the sulfur content to zero. If the sulfur content is not reduced to zero, then some $SO_2$ is present which handicaps $CO_2$ removal. Therefore, the cooled gas flow from tower 42 is then input to an absorber tower 46. Tower 46 is identical to tower 16 except it is scaled much smaller and also uses the feed of absorbent to remove all sulfur compounds. The discharge from tower 46 is sulfur free $CO_2$ and other inert products into the line connecting to the $CO_2$ absorber 48.

The smaller sulfur absorber tower 46 is connected parallel to the tower 16 by the lines 52 and 54. In other words, the absorbent, especially NNDP, is used in two absorbers which differ only in their scale.

The sulfur recovered from the tower 46 is recycled by lines 54, 20 and 19 for burning again in burner 30 to enhance sulfur recovery.

Any selected portion of the gas flow in line 40 can be returned directly by the line 50 for recycling. This avoids the expense of installing the tower 46 and the $CO_2$ absorber 48 in the event that $CO_2$ recovery is not intended, or if $CO_2$ recovery is intended from the flue gas of absorber tower 16. This valuable by-product, $CO_2$, can be recovered only if the sulfur compounds are stripped out of the gas to avoid poisoning MEA used in $CO_2$ removal. In particular, COS is destructive to MEA. Also, MEA will remove $H_2S$ with $CO_2$ and thereby degrade $CO_2$ purity.

Several reactions need to be described to obtain a better understanding of the process which goes on in the equipment shown and described above. The primary conversion reaction involves the conversion of $SO_2$. Looking only to the $SO_2$ recovered from the absorption and desorption cycle, the burner 30 converts it by burning and thereby achieves the following reaction:

$$CH_4 + 2SO_2 \rightarrow S_2 + CO_2 + 2H_2O$$

Oxygen (in any form) is not required once reaction temperature has been reached after start up. The word "burner" is used to describe the process used for this reaction. The reaction is exothermic and so maintains its temperature, but $O_2$ may be needed to start up the unit. Low levels of $O_2$ in the feed are not detrimental nor beneficial beyond the extra heat produced and the loss of $CH_4$ through combustion ($CH_4$ +

$O_2 \rightarrow CO_2 + 2H_2O$). The $S_2$ is airborne in the gas flow and is therefore recovered by the washing in the wash tower 34. The $CO_2$ can be conveniently recovered at the $CO_2$ absorption unit 48.

To the extent that there is any COS obtained from the flue gas, the NNDP absorbent appears to have a catalytic influence on hydrolyzing COS to convert COS into $CO_2$ and $H_2S$. The NNDP absorbent carries the $H_2S$ in it. The $H_2S$ is converted either to $SO_2$ and subsequently to elemental sulfur, or is converted directly to sulfur. In either case, it is formed as elemental sulfur which is airborne in the hot gas stream and is subsequently removed at the wash tower 34.

In operation, the flue gas source 10 is initiated in operation and discharges hot flue gases to the column 12. They are washed to remove fly ash particles, cinders and the like. The washed gas is then delivered to the tower 16 for further treatment with absorbent, NNDP being the preferred form. This absorbent is used in sufficient quantity to absorb substantially all the sulfur products in the flue gas stream. This would include various oxides of sulfur as well as COS and also $H_2S$. The absorbent flows in an endless loop. It absorbs and desorbs to deliver the $SO_2$ and other trace sulfur compounds out of the desorber column 18 for the burner 30. On burning, preferably with methane, the $SO_2$ is converted from $SO_2$ into elemental sulfur. It is airborne elemental sulfur which is ultimately removed in the wash tower 34, for subsequent separation and storage. To the extent that sulfur gases are discharged from the wash tower 34 they are ultimately recycled to the tower 16 for another pass through the absorbent. The absorbent is recycled to thereby economically recover the various flue gas sulfur compounds on the first pass or upon later recycling. Thus, to the extent that any sulfur in any form escapes the wash tower 34, it is subsequently exposed to recycling and can ultimately be recovered. The process is relatively efficient in that very little absorbent is lost, especially taking advantage of NNDP vapor pressure characteristics.

The location of the $CO_2$ absorber can be altered. In the illustrated schematic drawing, the $CO_2$ absorber recovers $CO_2$ from the natural gas ($CH_4$) from the burner 30. This helps recover a significant portion of the natural gas cost to operate the disclosed recovery system. More $CO_2$ is discharged as flue gas from the absorber tower 16.

Relative amounts of $CO_2$ and sulfur compounds available from the flue gas source should be considered. A typical flue gas stream from a coal burning power plant may discharge 200 to 2000 ppm $SO_2$ while the $CO_2$ may run as high as 13%. In this event, the better location of the $CO_2$ absorber is at the output of the absorber tower 16. This would require a relatively large scale $CO_2$ absorber to collect the available $CO_2$. By contrast, consider flue gas from a smelter. The $CO_2$ content is quite small while the sulfur content can be upwards of 4000 ppm. In this instance, very little $CO_2$ is available from the flue. Therefore, it would be desirable to locate the $CO_2$ absorber as illustrated. In either arrangement, $CO_2$ recovery will cover a significant portion of operating costs.

CLAIMS:

1. A process for the conversion or reduction of sulfur compounds present in a gas stream to elemental sulfur which comprises the steps of:

(a) contacting the gas stream with an absorbent which flows in a closed loop and is capable of absorbing the sulfur compounds;

(b) desorbing the sulfur compounds from the absorbent;

(c) burning the desorbed sulfur compounds in the presence of methane to form combustion products including elemental sulfur, sulfur compounds and carbon compounds; and

(d) washing with water the combustion products including elemental sulfur and sulfur compounds.

2. A process as claimed in Claim 1, wherein elemental sulfur is separated from the water wash.

3. A process as claimed in Claim 1 or Claim 2, wherein remaining sulfur compounds are recycled from the washed combustion products to mix with further inflow of the gas stream.

4. A process as claimed in any one of the preceding claims, wherein the gas stream is a flue gas.

5. A process as claimed in any one of the preceding claims, wherein the methane is present as natural gas.

-12-

6. A process as claimed in any one of the preceding claims, wherein the washed combustion products are contacted with absorbent and remaining sulfur compounds are desorbed and recycled to step (c).

7. A process as claimed in any one of the preceding claims wherein, after the water wash step (d), $CO_2$ is removed from the combustion products stream.

8. A process as claimed in Claim 7, wherein $CO_2$ is removed from the combustion products remaining after the absorbent contact specified in Claim 5.

9. A process as claimed in any one of the preceding claims wherein, one of the sulfur compounds is COS and including the step of hydrolyzing the COS to obtain $H_2S$.

10. A process as claimed in any one of the preceding claims, wherein the absorbent is a piperazinone, an N-alkylpiperazinone or an N,N'-dialkylpiperazinone.

11. A process as claimed in Claim 10, wherein the absorbent is N,N'-dimethylpiperazinone.

0 270 223

CO2

European Patent Office

**EUROPEAN SEARCH REPORT**

Application Number

EP 87 30 9041

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ENGINEERING, vol. 79, no. 22, 2nd October 1972, pages 50-51, New York, US; W.D. HUNTER et al.: "SO2 converted to sulfur in Stackgas cleanup route" <br> * complete document * | 1,4,5 | B 01 D 53/34 <br> C 01 B 17/04 |
| A | INDUSTRIE ANZEIGER, vol. 108, no. 30/31, 18th April 1986, pages 32-33, Essen; "Endprodukt Schwefel" <br> * complete document * | 1,4 | |
| A,P | EP-A-0 207 199 (THE DOW CHEMICAL CO.) <br> * claims 1, 5 * | 1,10,11 | |
| A | US-A-4 113 849 (G.R. ATWOOD) <br> * claim 1 * | | |

TECHNICAL FIELDS SEARCHED (Int. Cl.4)

B 01 D 53/00
C 01 B 17/00

The present search report has been drawn up for all claims

| Place of search | Date of completion of the search | Examiner |
|---|---|---|
| BERLIN | 08-01-1988 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)